# EUROPEAN PATENT SPECIFICATION

(11) **EP 3 071 337 B1**
(45) Date of publication and mention of the grant of the patent: **04.07.2018**
(21) Application number: 14864049.3
(22) Date of filing: 28.10.2014
(51) Int. Cl.: H01M 2/02, B05D 1/02, H01B 3/30

(54) **BATTERY CELL COATINGS**
BATTERIEZELLENBESCHICHTUNGEN
REVÊTEMENTS D'ÉLÉMENT DE BATTERIE

(30) Priority: 20.11.2013 US 201314085391
(43) Date of publication of application: 28.09.2016
(73) Proprietor: Henkel IP & Holding GmbH, 40589 Düsseldorf (DE)
(72) Inventor: LI, Wei, Chaska, MN 55318 (US); MISRA, Sanjay, Shoreview, MN 55126 (US)
(74) Representative: Henkel IP Department
(86) International application number: PCT/US2014/062601
(87) International publication number: WO 2015/076985

(56) References cited:
- WO-A1-2008/076665
- JP-A- 2005 232 373
- US-A1- 2005 281 999
- US-A1- 2009 191 448
- US-A1- 2011 250 475
- US-A1- 2012 121 944
- US-A1- 2012 217 434
- US-A1- 2012 219 838
- US-A1- 2012 228 542
- US-A1- 2013 302 659
- ZHOU ET AL.: 'PYROLYTIC POLYUREA ENCAPSULATED NATURAL GRAPHITE AS ANODE MATERIAL FOR LITHIUM ION BATTERIES;' ELECTROCHEM. ACTA vol. 50, 2005, pages 4728 - 4735, XP027694652

## Description

### Field of the Invention

The present invention relates to coating compositions generally, and more particularly to battery systems with thermally conductive coatings.

### Background of the Invention

Electricity-generating reactions underlying battery operation generally fall within well known battery categories, such as lead-acid batteries, lithium-ion batteries, nickel metal hydride batteries, and so on. Depending upon the application, however, batteries can widely differ in scale, from less than a gram to several hundred kilograms. Lithium-ion batteries with aluminum casings in cells are an example class of batteries that are commonly employed in high electrical output per unit weight applications, such as in aircraft and in electrical vehicles. Given the high total output often called for in such applications, several battery cells may be used in a coordinating battery pack. To ensure consistent and effective function of the battery packs over time, it is important to minimize corrosion, abrasion, and vibration of the battery cells, as well as water condensation on the battery cell surfaces. It can also be of great importance to provide for thermal dissipation from the battery cells, particularly in battery packs employing a plurality of closely-spaced battery cells that generate significant heat in the production of electricity. It is therefore common to employ battery cell coatings that seek to inhibit corrosion and abrasion of the battery cells, and to electrically insulate each battery cell from one another in a battery pack. US 2013/302659 A1 discloses a thermally conductive and, at the same time, electrically insulating member covering the metal casing of a battery, said insulating member having a laminated sheet shape and comprising three layers composed of a backing layer, a first thermally conductive layer and a second thermally conductive layer. The backing layer has a thermal conductivity of less than 0.5 W/mK whilst the two conductive layer have a thermal conductivity of at least 0.5 W/mK. Battery cell electrical insulation is conventionally achieved by wrapping the individual cells with polyimide films. Polypropylene film is then placed outside of the polyimide film for protection of the battery cell under significant clamping forces. Such films, however, exhibit low thermal conductivity, and require significant processing time and expense to complete the wrapping procedures. Powder coatings for battery cell protection have been attempted, but typically require significant heating for cure, wherein the elevated temperatures are unacceptable for electrolyte-loaded battery cells. Moreover, full edge coverage of the battery cells is difficult with powder coating applications, and thereby result in poor overall electrical insulation properties. Dip coatings are also limited for battery cell insulation applications since they typically require extended time for drying and curing.

It is therefore an object of the present invention to provide a battery system in which a battery cell coating provides thermal conductivity, electrical insulation, as well as abrasion and corrosion resistance, wherein the coating may be quickly formed in the absence of elevated temperatures.

### Summary of the Invention

In one embodiment, a battery system of the present invention includes a battery cell having a metal casing and a polyurea coating on the metal casing. The polyurea coating may be formed from a reaction mixture having a first component with a viscosity of 100-2000 cP, and including isocyanate and ceramic particles, wherein the isocyanate includes an isocyanate functional prepolymer. The reaction mixture further includes a second component having a viscosity of 100-2000 cP, and including an amine and ceramic particles. The first and second components of the reaction mixture are sprayable under pressure, and react with one another to form the polyurea coating having a thickness, a thermal conductivity of at least 0.40 W/m * K, and a dielectric strength of at least 0.8 kV/mil of the coating thickness.

In another embodiment, a method for applying a thermally conductive, dielectric polyurea coating to a battery cell casing includes preparing a reaction mixture having first and second components, each with a viscosity of 100-2000 cP. The first component includes isocyanate and ceramic particles, wherein the isocyanate includes an isocyanate functional prepolymer. The second component includes an amine and ceramic particles. The first component is sprayed through a first orifice onto the battery cell casing and, substantially simultaneously therewith, the second component is sprayed through a second orifice onto the battery cell casing so that the first and second components react with one another to form the polyurea coating. The coating exhibits a thickness, a thermal conductivity of at least 0.40 W/m * K, and a dielectric strength of at least 0.8 kV/mil of the coating thickness.

A further coating composition of the present invention includes a polyurea that is formed from a reaction mixture of first and second components, wherein the first component includes isocyanate and ceramic particles. The isocyanate may include an isocyanate functional prepolymer, and the ceramic particles have a particle sieve size of 0.01-100 micrometers, and a concentration of 5-400 PHR in the first component. The second component includes an amine, and ceramic particles having a particle sieve size of 0.01-100 micrometers and a concentration of 5-400 PHR in the second component. The first and second components are sprayable under pressure and react with one another to form the polyurea coating. The coating exhibits a thickness, a thermal conductivity of at least 0.40 W/m * K, and a dielectric strength of at least 0.8 kV/mil of the coating thickness.

### Brief Description of the Drawings

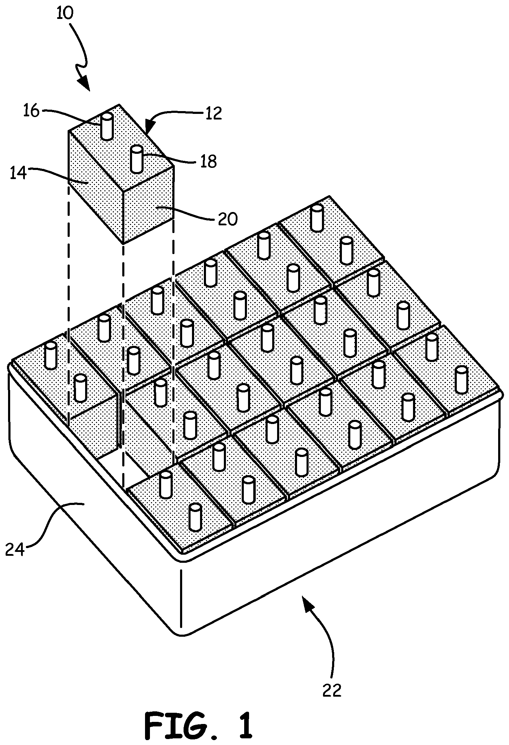

Figure 1 is a schematic illustration of a battery system of the present invention.

### Detailed Description of the Preferred Embodiments

The objects and advantages enumerated above together with other objects, features, and advances represented by the present invention will now be presented in terms of detailed embodiments. Other embodiments and aspects of the invention are recognized as being within the grasp of those having ordinary skill in the art.

For the purposes hereof, the term "polymer" is meant to refer to prepolymers, oligomers, homopolymers, and copolymers.

The present battery cell coating composition comprises polyurea formed from a reaction mixture of a first component having an isocyanate ("isocyanate component"), and a second component having an amine ("amine component"). The isocyanate component includes an isocyanate functional prepolymer, and may also include an isocyanate that is not used to form the isocyanate functional prepolymer. The non-prepolymer isocyanate may be the same or different from the isocyanate used to form the isocyanate functional prepolymer, and the isocyanate functional prepolymers may be substantially compatible with the non-prepolymer isocyanate. The term "substantially compatible" is intended to mean the ability of a material to form a blend with other materials that is and will remain substantially homogenous over time. The amine component may be referred to herein as a "curative" because it will react or cure with the isocyanate to form a polyurea.

As used herein, the term "isocyanate" includes unblocked compounds capable of forming a covalent bond with a reactive group such as a hydroxyl, thiol or amine functional group. Thus, isocyanate can refer to "free isocyanate", which is well understood by those of ordinary skill in the art. In some embodiments, the isocyanate of the present invention may be monofunctional (containing one isocyanate functional group (NCO)) or the isocyanate used in the present invention may be polyfunctional (containing two or more isocyanate functional groups (NCOs)).

Suitable isocyanates for use in the present invention are numerous and can vary widely, and may include those that are known in the art. Non-limiting examples of suitable isocyanates may include monomeric and/or polymeric isocyanates. The isocyanates may be selected from monomers, prepolymers, oligomers, or blends thereof. In some embodiments, the isocyanate may be C₂-C₂₀ linear, branched, cyclic, aromatic, or blends thereof.

Suitable isocyanates for use in the present invention may include isophorone diisocyanate (IPDI), which is 3,3,5-trimethyl-5-isocyanato-methyl-cyclohexyl isocyanate; hydrogenated materials such as cyclohexylene diisocyanate, 4,4'-methylenedicyclohexyl diisocyanate (H₁₂MDI); mixed aralkyl diisocyanates such as tetramethylxylyl diisocyanates, OCN-C(CH₃)₂-C₆H₄C(CH₃)₂-NCO; polymethylene isocyanates such as 1,4-tetramethylene diisocyanate, 1,5-pentamethylene diisocyanate, 1,6-hexamethylene diisocyanate (HMDI), 1,7-heptamethylene diisocyanate, 2,2,4- and 2,4,4-trimethylhexamethylene diisocyanate, 1,10-decamethylene diisocyanate and 2-methyl-1,5-pentamethylene diisocyanate; and mixtures thereof.

Examples of aromatic isocyanates for use in the present invention may phenylene diisocyanate, toluene diisocyanate (TDI), xylene diisocyanate, 1,5-naphthalene diisocyanate, chlorophenylene 2,4-diisocyanate, bitoluene diisocyanate, dianisidine diisocyanate, tolidine diisocyanate, alkylated benzene diisocyanates, methylene-interrupted aromatic diisocyanates such as methylenediphenyl diisocyanate, 4,4'-isomer (MDI) including alkylated analogs such as 3,3'-dimethyl-4,4'-diphenylmethane diisocyanate, polymeric methylenediphenyl diisocyanate; and mixtures thereof.

In certain embodiments, isocyanate monomer may be used. It is believed that the use of an isocyanate monomer (i.e., residual-free monomer from the preparation of prepolymer) may decrease the viscosity of the polyurea composition thereby improving its flowability, and may provide improved adhesion of the polyurea coating to a previously applied coating and/or to an uncoated substrate.

The isocyanate may include oligomeric isocyanate such as but not limited to dimers such as the uretdione of 1,6-hexamethylene diisocyanate, trimers such as the biuret and isocyanurate of 1,6-hexanediisocyanate and the isocyanurate of isophorone diisocyanate, allophonates and polymeric oligomers. Modified isocyanates may also be used, including but not limited to carbodiimides and uretone-imines, and mixtures thereof.

As used herein, "prepolymer" means isocyanate which is pre-reacted with polyamine or other isocyanate reactive group such as polyol. As used herein, "isocyanate functional prepolymer" means prepolymer having at least one isocyanate functional group (NCO).

Suitable amines for use in the amine component of the present invention may include those known in the art, such as primary and secondary amines, and mixtures thereof. In some embodiments, the amine may include monoamines, or polyamines having at least two functional groups such as di-, tri-, or higher functional amines; and mixtures thereof. In further embodiments, the amine may be aromatic or aliphatic such as cycloaliphatic, or mixtures thereof. Examples of suitable monoamines include aliphatic polyamines such as ethylamine, isomeric propylamines, butylamines, pentylamines, hexylamines, cyclohexylamine, and benzylamine. Suitable primary polyamines include, but are not limited to, ethylene diamine, 1,2-diaminopropane, 1,4-diaminobutane, 1,3-diaminopentane (DYTEK EP, Invista), 1,6-diaminohexane, 2-methyl-1,5-pentane diamine (DYTEK A, Invista), 2,5-diamino-2,5-dimethylhexane, 2,2,4- and/or 2,4,4-trimethyl-1,6-diamino-hexane, 1,11-diaminoundecane, 1,12-diaminododecane, 1,3-and/or 1,4-cyclohexane diamine, 1-amino-3,3,5-trimethyl-5-aminomethyl-cyclohexane, 2,4- and/or 2,6-hexahydrotoluoylene diamine, 2,4'-diaminodicyclohexyl methane, 4,4'-diaminodicyclohexyl methane (PACM-20, Air Products) and 3,3'-dialkyl-4,4'-diaminodicyclohexyl methanes (such as 3,3'-dimethyl-4,4'-diaminodicyclohexyl methane (DIMETHYL DICYKAN or LAROMIN C260, BASF; ANCAMINE 2049, Air Products) and 3,3'-diethyl-4,4'-diaminodicyclohexyl methane), 2,4- and/or 2,6-diaminotoluene, 3,5-diethyltoluene-2,4-diamine, 3,5-diethyltoluene-2,6-diamine, 3,5-dimethylthio-2,4-toluenediamine, 3,5-dimethylthio-2,4-toluenediamine, 2,4'- and/or 4,4'-diaminodiphenyl methane, dipropylene triamine, bis hexamethylene triamine, or combinations thereof. Polyoxyalkyleneamines are also suitable. Polyoxyalkyleneamines comprise two of more primary or secondary amino groups attached to a backbone, derived, for example, from propylene oxide, ethylene oxide, butylene oxide or a mixture thereof. Examples of such amines include those available under the designation JEFFAMINE, such as, without limitation, JEFFAMINE D-230, D-400, D-2000, HK-511, ED-600, ED-900, ED-2003, T-403, T-3000, T-5000, SD-231, SD-401, SD-2001, and ST-404 (Huntsman Corporation). Such amines have an approximate molecular weight ranging from 200 to 7500.

Secondary cycloaliphatic diamines may also be used in the present invention. Suitable cycloaliphatic diamines include, without limitation, JEFFLINK 754 (Huntsman Corporation), CLEARLINK 1000 (Dorf-Ketal Chemicals, LLC), and aspartic ester functional amines, such as those available under the name DESMOPHEN such as DESMOPHEN NH1220, DESMOPHEN NH 1420, and DESMOPHEN NH 1520 (Bayer Materials Science LLC.). Other suitable secondary amines that can be used in the present invention include the reaction products of materials comprising primary amine functionality, such as those described herein, with acrylonitrile. For example, the secondary amine can be the reaction product of 4,4'-diaminodicyclohexylmethane and acrylonitrile. Alternatively, the secondary amine can be the reaction product of isophorone diamine and acrylonitrile, such as POLYCLEAR 136 (available from Hansen Group LLC).

Other amines that can be used in the present invention include adducts of primary polyamines with mono or polyepoxies such as the reaction product of isophorone diamine with Cardura E-10P.

In some embodiments, the amine component may include a mixture of primary and secondary amines. In some embodiments, the amine component may be substantially free of primary amine functionality (unreacted primary amino groups). "Substantially free of primary amine functionality" means that theoretically there is no primary amine functionality but there maybe some primary amine functionality present that is purely incidental, i.e., impurities in amines that are otherwise secondary amine functional and/or trace primary amine functionality that did not react.

In another embodiment, the amine component may include aliphatic amine. It is believed that the presence of aliphatic amine may provide enhanced durability. In this embodiment, the amine typically is provided as a liquid having a relatively low viscosity, for example, less than about 100 mPas at 25°C.

In certain embodiments, the coating compositions used according to the present invention may include a blend of polyurea and polyurethane. As used herein, "polyurea" includes both polyurea and blends of polyurea and polyurethane. It will be appreciated by those skilled in the art that polyurethane may be formed as a by-product in the reactions according to the present invention. In alternate embodiments, the polyurethane can be formed in-situ and/or it can be added to the reaction mixture.

The polyurea coating compositions of the present invention may optionally include materials standard in the art such as but not limited to adhesion promoters, catalysts, colorants, antioxidants, UV absorbers, diluents, plasticizers, rheology modifiers, flow additives, anti-static agents and other performance or property modifiers which are well known in the art of surface coatings, and mixtures thereof. Such materials may be combined with the isocyanate component, the amine component, or both.

In some embodiments, the coating composition of the present invention may include an adhesion promoter which may enhance adhesion of the coating composition to a substrate. When the coating composition of the present invention is applied over a first coating, an adhesion promoter may be present in the first coating composition, or it may be added to the isocyanate component and/or amine component of the second coating composition, or it may be applied as a separate layer directly to the substrate or first coating prior to application of the second coating thereto. When applied as a separate layer, the adhesion promoter may be applied using a variety of conventional techniques such as but not limited to wiping, dipping, roll coating, curtain coating, spraying or the like.

Non-limiting examples of suitable adhesion promoters for use in the present invention may include amine-functional materials such as 1,3,4,6,7,8-hexahydro-2H-pyrimido-(1,2-A)-pyrimidine, hydroxyethyl piperazine, N-aminoethyl piperizine, dimethylamine ethylether, tetramethyliminopropoylamine (commercially available as POLYCAT 15 from Air Products and Chemicals, Inc.), epoxy-based materials (available as Silane A-187 from Momentive Performance Materials), blocked amines such as an adduct of IPDI and dimethylamine, tertiary amines, such as 1,5-diazabicyclo[4.3.0]non-5-ene, 1,8-diazabicyclo[5.4.0]undec-7-ene, 1,4-diazabicyclo[2.2.2]octane, 1,5,7-triazabicyclo[4.4.0]dec-5-ene, and 7-methyl-1,5,7-triazabicyclo[4.4.0]dec-5-ene, amino silanes such as γ-aminopropyltriethoxysilane (commercially available as Silquest A1100 from Momentive Performance Mateirals, Inc.), melamine or amino melamine resin (e.g. Cymel 220 or Cymel 303, available from Cytec Industries Inc.), metal complexes including metal chelate complexes such as an aluminum chelate complex (e.g. K-KAT 5218 available from King Industries) or tin-containing compositions such as stannous octoate and organotin compounds such as dibutyltin dilaurate and dibutyltin diacetate, urethane acrylate compositions, salts such as chlorine phosphate, butadiene resins such as an epoxidized, hydroxyl terminated polybutadiene resin (e.g. POLY BD 605E available from Atofina Chemicals, Inc.), polyester polyols (e.g. CAPA 3091, a polyester triol available from Solvay America, Inc., and urethane acrylate compositions such as an aromatic urethane acrylate oligomer (e.g. CN999 available from Sartomer Company, Inc.); and mixtures thereof.

In some embodiments, the coating may further comprise a solvent, such as Xylene. In other embodiments, however, the coating may be substantially solvent-free. "Substantially solvent-free" means that the coating may contain a small amount of solvent, such as 5%, 2%, 1% or less.

In some embodiments, the coating composition of the present invention may include a colorant. As used herein, the term "colorant" means any substance that imparts color and/or other opacity and/or other visual effect to the composition. The colorant may be added to the coating in any suitable form, such as discrete particles, dispersions, solutions and/or flakes. A single colorant or a mixture of two or more colorants may be used in the coatings of the present invention.

Example colorants include pigments, dyes and tints, such as those used in the paint industry and/or listed in the Dry Color Manufacturers Association (DCMA), as well as special effect compositions. A colorant may include, for example, a finely divided solid powder that is insoluble but wettable under the conditions of use. A colorant can be organic or inorganic and can be agglomerated or non-agglomerated. Colorants can be incorporated into the coatings by grinding or simple mixing. Colorants can be incorporated by grinding into the coating by use of a grind vehicle, such as an acrylic grind vehicle, the use of which will be familiar to one skilled in the art.

Example pigments and/or pigment compositions include, but are not limited to, carbazole dioxazine crude pigment, azo, monoazo, disazo, naphthol AS, salt type (lakes), benzimidazolone, condensation, metal complex, isoindolinone, isoindoline and polycyclic phthalocyanine, quinacridone, perylene, perinone, diketopyrrolo pyrrole, thioindigo, anthraquinone, indanthrone, anthrapyrimidine, flavanthrone, pyranthrone, anthanthrone, dioxazine, triarylcarbonium, quinophthalone pigments, diketo pyrrolo pyrrole red ("DPPBO red"), titanium dioxide, carbon black, carbon fiber, graphite, other conductive pigments and/or fillers and mixtures thereof. The terms "pigment" and "colored filler" can be used interchangeably.

Example dyes include, but are not limited to, those that are solvent and/or aqueous based such as acid dyes, azoic dyes, basic dyes, direct dyes, disperse dyes, reactive dyes, solvent dyes, sulfur dyes, mordant dyes, for example, bismuth vanadate, anthraquinone, perylene, aluminum, quinacridone, thiazole, thiazine, azo, indigoid, nitro, nitroso, oxazine, phthalocyanine, quinoline, stilbene, and triphenyl methane.

Example tints include, but are not limited to, pigments dispersed in carriers such as Phthalo Blue from Plasticcolors.

The coating compositions of the present invention further include thermally conductive ceramic particles loaded in both the isocyanate component and the amine component to provide the coating with a suitable thermal conductivity of at least 0.40 W/m * K. Typical ceramic particle loading in the isocyanate component and the amine component to obtain the desired minimum thermal conductivity property ranges from 5-400 phr of the respective components, and more typically between 25-200 phr. Such loading concentrations of thermally conductive ceramic particles was not previously considered possible, as such loading concentrations were generally thought to render at least the isocyanate component non-sprayable as a result of contingent viscosity build up. Consequently, polyurea coatings have not previously been provided with sufficient thermally conductive particulate loading to realize the desired thermal conductivity properties of the present polyurea coating.

To aid in reactant viscosity control, the thermally conductive ceramic particles may be of a certain particle size distribution and within a controlled aspect ratio range. The particle seive size may accordingly be between 0.01-100 micrometers. In another embodiment, the thermally conductive ceramic particles may have a mean particle size of 0.01-100 micrometers, or between 1-25 micrometers. The particle aspect ratios for sphere, rod, or plate-shaped particles may preferably be between 1-50, or between 1-10.

The thermally conductive ceramic particles may be selected from a variety of materials that afford the thermally conductive properties at the loading concentrations described above. Example thermally conductive ceramic particle materials include alumina, aluminum nitride, boron nitride, berylium oxide, zinc oxide, titanium dioxide, magnesium dioxide, and combinations thereof. Such particles impart both substantial thermal conductivity and enhance dielectric strength of the polyurea coatings of the present invention.

The thermally conductive ceramic particle loading concentrations, particle sizes, and aspect ratios aid in maintaining a fully sprayable mixture for both isocyanate component and the amine component. In particular, both the isocyanate component and the amine component preferably exhibit a dynamic viscosity of 100-2000 cP, as measured with a cross-type B spindle at 50 rpm using a Brookfield viscometer. In certain embodiments, the dynamic viscosities of the isocyanate component and the amine component are between 100-400 cP, as measured as described above.

The present invention is further directed to a battery system 10, as shown in Figure 1, and methods for applying a thermally conductive, dielectric polyurea coating to a battery cell. The illustrated battery system 10 includes a battery cell 12 having a metal casing 14 and first and second terminals 16, 18. Battery cell 12 may be any of a variety of battery types, wherein a need for a thermally conductive, dielectric polyurea coating 20 is identified. A particular embodiment of battery system 10 may employ lithium ion-type battery cells 12, which may be used in a battery pack 22 with a plurality of battery cells 12. Battery pack 22 may be secured together within an external clamp 24 that may be positioned about the group of battery cells 12 in battery pack 22.

The polyurea coating 20 of the present invention may be applied to portions of, or the entirety of battery cell 12. Coating 20 may be applied as described below to cell casing 14, and may, in some embodiments, completely cover casing 14, or may completely cover battery cell 12. In doing so, polyurea coating 20 may eliminate the need for conventional electrical insulation typically applied to battery cells 12 in a battery pack 22. In some embodiments, polyurea coating 20 may be applied to portions of, or an entirety of clamp 24 of battery pack 22.

The polyurea coating of the present invention provides a dielectric barrier between adjacent cells 12 in battery pack 22, as well as between cells 12 and clamp 24 of battery pack 22. The coating is provided in a manner to establish a minimum threshold voltage breakdown strength of at least 800 V/mil (or 0.8 kV/mil) of coating thickness. The volume resistivity of the coating may be in the range of 10⁸Ω * meter. In addition to the electrical insulation properties of coating 20, reduction of thermal impedance between adjacent cells 12 and/or between cells 12 and a heat sink is provided. Thermal conductivity values of at least 0.40 W/m * K, and more preferably at least 0.50 W/m * K forms an efficient thermal pathway for introduction or dissipation of heat to or from battery cell 12. Further, the polyurea coatings of the present invention confer protection from abrasion to cells 12. The polyurea coatings of the present invention exhibit substantial abrasion resistance and durability over extended use cycles.

The present invention is further directed to methods for coating a substrate, such as a battery cell, comprising applying to at least a portion of the substrate any of the coating compositions described herein. In an embodiment, conventional spraying techniques may be used. In some embodiments, the isocyanate component and amine component may be combined such that the ratio of equivalents of isocyanate groups to equivalents of amine groups is greater than 1 and the isocyanate and amine can be applied to a substrate at a volume mixing ratio of 1:1; and the reaction mixture may be applied to an uncoated or coated substrate to form a first coating on the uncoated substrate or a subsequent coating on the coated substrate. When determining the ratio of equivalents of isocyanate groups to equivalents of reactive amine groups, the total amine groups are taken into consideration; that is the amine groups from any amine or amines used in the coating.

It will be appreciated that the present compositions are two component or "2K" compositions, wherein the isocyanate component and the amine component are kept separate until just prior to application. Such compositions will be understood as curing under ambient conditions, although a heated forced air or a heat cure can be applied to accelerate final cure or to enhance coating properties such as adhesion. In one embodiment, the sprayable coating composition may be prepared using a two-component mixing device. In this embodiment, isocyanate and amine are added to a high pressure impingement mixing device. The isocyanate component is added to the "A-side" and amine component is added to the "B-side". The A- and B-side streams are impinged upon each other and immediately sprayed onto at least a portion of an uncoated or coated substrate. The isocyanate component and the amine component react to produce a coating composition which is cured upon application to the uncoated or coated substrate. The A- and/or B-side may be heated prior to application, such as to a temperature of 140° F. Heating may promote a better viscosity match between the two components and thus better mixing, but is not necessary for the curing reaction to occur.

The volume mixing ratio of the isocyanate and amine may be such that the resulting isocyanate component and amine component reaction mixture can be applied to a substrate at a volume mixing ratio of 1:1. As used herein, "volume mixing ratio 1:1" means that the volume mixing ratio varies by up to 20% for each component, or up to 10% or up to 5%.

In some embodiments, a commonly available mixing device available under the designation Graco E-XP 2 reactor fitted with a Fusion MP spray gun may be used. In this device, pressurized streams of the A- and B-side components are delivered from two separate containers, are impacted or impinged upon each other at high velocity, to mix the two components and form a coating composition, which may be applied to an uncoated or coated substrate using the spray gun. The mixing forces experienced by the component streams may depend upon the volume of each stream entering the mixing chamber per unit time and the pressure at which the component streams are delivered. A 1:1 volume ratio of the isocyanate component and amine component per unit time may equalize these forces.

Another suitable application device known in the industry includes a "static mix tube" applicator. In this device, the isocyanate and amine are each stored in a separate chamber. As pressure is applied, each of the components is brought into a mixing tube in a 1:1 ratio by volume. Mixing of the components is effected by way of a torturous or cork screw pathway within the tube. The exit end of the tube may have atomization capability useful in spray application of the reaction mixture. Alternatively, the fluid reaction mixture may be applied to a substrate as a bead. A static mix tube applicator is commercially available from Cammda Corporation or Plas-Pak Industries, Inc.

The coating composition of the present invention may be applied to a wide variety of substrates. Though the metal casing of a battery cell is a particular target application of the present invention, other examples of suitable substrates may include metal, natural and/or synthetic stone, ceramics, glass, the like. Metals can include but are not limited to aluminum, cold rolled steel, electrogalvanized steel, hot dipped galvanized steel, titanium and alloys. Further, the coating composition of the present invention may be applied to said substrates to impart one or more of a wide variety of properties such as thermal conductance, electrical resistance, corrosion resistance, and abrasion resistance. In some embodiments, the polyurea coating may be formed in one or more layers to establish a total coating thickness of 0.05-1.5mm (2-60 mils).

### Example

A 2-K coating formulation was prepared from a Part A premix (isocyanate component) and a Part B premix (amine component), with the following ingredients:

**Table 1**

| | Part A | Parts by weight | Part B | Parts by weight |
|---|---|---|---|---|
| 1 | QZ-P16 | 100 | Jeffamine D230 | 6 |
| 2 | Alumina | 196 | Jeffamine D2000 | 61 |
| 3 | Jeffsol PC | 15 | Alumina | 200 |
| 4 | Xylene | 20.6 | Baxxodur EC311 | 7 |
| 5 | Borchi Gol 0011 | 0.5 | Lonza DETDA 80 | 17 |
| 6 | | | Polylink 4200 | 5 |
| 7 | | | Arnox 6 | 14 |
| 8 | | | Xylene | 15.2 |
| 9 | | | Silane A-187 | 0.4 |
| 10 | | | AD-30342 | 5.4 |

The following Table 2 sets forth the material descriptions and commercial sources of the ingredients of Table 1:

**Table 2**

| | |
|---|---|
| QZ-P16 | MDI-based polyisocyanate prepolymer having an NCO content of 16.5%, available from BASF Corporation |
| Alumina | spherical alumina particles having a mean particle size of 5 micrometers |
| Jeffsol PC | Propylene carbonate as a diluent/viscosity modifier; available from Huntsman Corporation |
| Xylene | Solvent available from Brenntag Group |
| Borchi Gol 0011 | Flow promoter; available from OM Group |
| Jeffamine D230 | Primary and difunctional and aliphatic polyester amines having a molecular weight of 230; available from Huntsman Corporation |
| Jeffamine D2000 | Primary and difunctional and aliphatic polyester amines having a molecular weight of 2000; available from Huntsman Corporation |
| Baxxodur EC311 | Primary and trifunctional and aliphatic polyether amine having a molecular weight of 5000; available from BASF Corporation |
| DETDA 80 | Primary aromatic diethyltoluenediamine; available from Lanza Group Limited |
| Polylink 4200 | Secondary and di-funtional aromatic amine; available from Dorf-Ketal Chemicals, LLC |
| Arnox 6 | Aldimine reactive diluent; available from Arnett Polymers |
| Silane A-187 | Epoxy-based adhesion promoter; available from Momentive Performance Materials, Inc. |
| AD-30342 | Phthalo Blue tint; available from Plastics Color Corporation |

### Procedure

The Part A premix was prepared in accordance with Table 1 by mixing, in a first container, the Part A premix materials under high shear planetary agitation to a typical viscosity of about 370 cP. The Part B premix in accordance with Table 1 was prepared by mixing, in a second container, the Part B premix materials under high shear planetary agitation until the mixture is fully homogenized to a typical viscosity of about 280 cP.

The Part A and Part B premix containers are agitated if necessary, and individually coupled by hoses to a Graco E-XP 2 reactor. A coating temperature of 150°F (65.6°C) for both the Part A and Part B premix materials was set while filling and circulating the premix materials through the hoses. A Fusion MP mechanical purge gun with a 0.5 gal/min tip setting was connected to the Graco reactor set at an impinging air pressure of up to 3500 psi (generating a trigger pressure of about 3000 psi). The operator then applied spray coatings of 4-8 mils per pass on aluminum substrates set up by fixtures. The applied coatings fully covered the substrates, and were tack-free in less than two minutes at ambient temperature.

The following Table 3 sets forth test results of the applied coatings as described above.

**Table 3**

| | Viscosity (cP) | Abrasion resistance | Electric insulation (kV/mil) | Thermally conductive ceramic filler loading (phr) | Thermal conductivity (W/m * K) | Tensile strength (psi) | Elongation at break (5) | Shock & Vibration |
|---|---|---|---|---|---|---|---|---|
| Part A | 368 | NA | NA | 100∼200 | NA | NA | NA | NA |
| Part B | 280 | NA | NA | 100∼200 | NA | NA | NA | NA |
| Spraying | <200 | NA | NA | NA | NA | NA | NA | NA |
| Sprayed & cured coating | Solid | CS-17 wheels 58mg weight loss CS-10 wheels: 76mg weight loss | 1.03 | NA | 0.40∼0.67 | 2015 | 8.2∼339.5 | Intact after all vibration exposures |
| Method | Brookfield (cross type B spindle at 50 rpm) | ASTM-4060-10, 1kg, 1000rev. | ASTM D-149 | NA | ASTM D-5470 | ASTM D-412C | ASTM D-412C | |

## Claims

1. A battery system, comprising:
a battery cell having a metal casing; and
a polyurea coating on said metal casing, said polyurea coating being formed from a reaction mixture comprising:
(a) a first component having a viscosity of 100-2000 cP, and comprising isocyanate and ceramic particles, wherein said isocyanate comprises an isocyanate functional prepolymer; and
(b) a second component having a viscosity of 100-2000 cP, and comprising an amine and ceramic particles,
wherein said first and second components are sprayable under pressure and react to form said polyurea coating having a thickness, a thermal conductivity of at least 0.40 W/m * K, and a dielectric strength of at least 31496 kV/m (0.8 kV/mil) of said coating thickness.

2. A battery system as in Claim 1 wherein said coating thickness is between 0.05 -1.5 mm.

3. A battery system as in Claim 1 wherein said ceramic particles of said first and second components have a particle seive size of 0.01-100 micrometers, and sphere, rod, or plate-shaped particle aspect ratios between 1-50.

4. A battery systems as in Claim 3 wherein said ceramic particles are present in said first and second components at a concentration of 4.76 - 80 wt% (5-400 phr).

5. A battery system as in Claim 4 wherein said ceramic particles of said first and second components are selected from a group consisting of alumina, aluminum nitride, boron nitride, berylium oxide, zinc oxide, titanium dioxide, magnesium oxide, and combinations thereof.

6. A method for applying a thermally conducive, dielectric polyurea coating to a battery cell casing, said method comprising:
(a) preparing a reaction mixture comprising:
(i) a first component having a viscosity of 100-2000 cP, and comprising isocyanate and ceramic particles, wherein said isocyanate comprises an isocyanate functional prepolymer; and
(ii) a second component having a viscosity of 100-2000 cP, and comprising an amine and ceramic particles;
(b) spraying said first component through a first orifice onto the battery cell casing; and
(c) substantially simultaneously with step (b), spraying said second component through a second orifice onto the battery cell casing so that said first and second components react to form said polyurea coating having a thickness, a thermal conductivity of at least 0.40 W/m * K, and a dielectric strength of at least 31496 kV/m (0.8 kV/mil) of said coating thickness.

7. A method as in Claim 6 wherein said polyurea coating thickness is between 0.05-1.5 mm.

8. A method as in Claim 6 wherein said ceramic particles of said first and second components have a particle sieve size of 0.01-100 micrometers, and sphere, rod, or plate-shaped particle aspect ratios between 1-50.

9. A method as in Claim 8 wherein said ceramic particles are present in said first and second components at a concentration of 4.76 - 80 wt% (5-400 phr).

10. A method as in Claim 9 wherein said ceramic particles of said first and second components are selected from the group consisting of alumina, aluminum nitride, boron nitride, berylium oxide, zinc oxide, titanium dioxide, magnesium oxide, and combinations thereof.

11. A coating composition, comprising:
polyurea formed from a reaction mixture comprising:
(a) a first component comprising isocyanate and ceramic particles, wherein said isocyanate comprisies an isocyanate functional prepolymer, and said ceramic particles have a particle seive size of 0.01-100 micrometers and a concentration of 4.76 - 80 wt% (5-400 phr) in said first component; and
(b) a second component comprising an amine and ceramic particles having a particle sieve size of 0.01-100 micrometers and a concentration of 4.76 - 80 wt% (5-400 phr) in said second component,
wherein said first and second components are sprayable under pressure and react with one another to form said polyurea coating having a thickness, a thermal conductivity of at least 0.40 W/m * K, and a dielectric strength of at least 31496 kV/m (0.8 kV/mil) of said coating thickness.

12. A coating composition as in Claim 11, wherein said thickness is between 0.05-1.5 mm.

13. A coating composition as in Claim 12 wherein said particulate ceramic filler of said first and second components has sphere, rod, or plate-shaped particle aspect ratios between 1-50.

14. A coating composition as in Claim 13 wherein said ceramic particles of said first and second components are selected from the group consisting of alumina, aluminum nitride, boron nitride, berylium oxide, zinc oxide, titanium dioxide, magnesium oxide, and combinations thereof.

15. A coating composition as in Claim 11 wherein said first component is shear thinning.

## Patentansprüche

1. Batteriesystem, umfassend:
eine Batteriezelle, die ein Metallgehäuse aufweist; und
eine Polyharnstoffbeschichtung auf dem Metallgehäuse, wobei die Polyharnstoffbeschichtung aus einem
Reaktionsgemisch gebildet wird, das Folgendes umfasst:
(a) eine erste Komponente, die eine Viskosität von 100-2000 cP aufweist und Isocyanat und Keramikpartikel umfasst, wobei das Isocyanat ein Prepolymer mit Isocyanat-Funktionalität umfasst; und
(b) eine zweite Komponente, die eine Viskosität von 100-2000 cP aufweist und ein Amin und Keramikpartikel umfasst,
wobei die erste und die zweite Komponente unter Druck gespritzt werden können und reagieren, um die Polyharnstoffbeschichtung zu bilden, die eine Dicke, eine Wärmeleitfähigkeit von mindestens 0,40 W/m *K und eine Spannungsfestigkeit von mindestens 31496 kV/m (0,8 kV/mil) der Beschichtungsdicke aufweist.

2. Batteriesystem nach Anspruch 1, wobei die Beschichtungsdicke zwischen 0,05-1,5 mm liegt.

3. Batteriesystem nach Anspruch 1, wobei die Keramikpartikel der ersten und der zweiten Komponente eine Partikelsiebgröße von 0,01-100 Mikrometern und kugel-, stäbchen- oder plättchenförmige Partikel mit Aspektverhältnissen zwischen 1-50 aufweisen.

4. Batteriesystem nach Anspruch 3, wobei die Keramikpartikel in der ersten und der zweiten Komponente in einer Konzentration von 4,76-80 Gew.-% (5-400 phr) vorliegen.

5. Batteriesystem nach Anspruch 4, wobei die Keramikpartikel der ersten und der zweiten Komponente aus einer Gruppe bestehend aus Aluminiumoxid, Aluminiumnitrid, Bornitrid, Berylliumoxid, Zinkoxid, Titandioxid, Magnesiumoxid und Kombinationen davon ausgewählt sind.

6. Verfahren zum Auftragen einer wärmeleitfähigen, dielektrischen Polyharnstoffbeschichtung auf ein Batteriezellengehäuse, wobei das Verfahren Folgendes umfasst:
(a) Herstellen eines Reaktionsgemisches, das Folgendes umfasst:
(i) eine erste Komponente, die eine Viskosität von 100-2000 cP aufweist und Isocyanat und Keramikpartikel umfasst, wobei das Isocyanat ein Prepolymer mit Isocyanat-Funktionalität umfasst; und
(ii) eine zweite Komponente, die eine Viskosität von 100-2000 cP aufweist und ein Amin und Keramikpartikel umfasst;
(b) Sprühen der ersten Komponente durch eine erste Öffnung auf das Batteriezellengehäuse; und
(c) im Wesentlichen gleichzeitig mit Schritt (b), Sprühen der zweiten Komponente durch eine zweite Öffnung auf das Batteriezellengehäuse, sodass die erste und die zweite Komponente miteinander reagieren, um die Polyharnstoffbeschichtung zu bilden, die eine Dicke, eine Wärmeleitfähigkeit von mindestens 0,40 W/m *K und eine Spannungsfestigkeit von mindestens 31496 kV/m (0,8 kV/mil) der Beschichtungsdicke aufweist.

7. Verfahren nach Anspruch 6, wobei die Polyharnstoffbeschichtungsdicke zwischen 0,05-1,5 mm liegt.

8. Verfahren nach Anspruch 6, wobei die Keramikpartikel der ersten und der zweiten Komponente eine Partikelsiebgröße von 0,01-100 Mikrometern und kugel-, stäbchen- oder plättchenförmige Partikel mit Aspektverhältnissen zwischen 1-50 aufweisen.

9. Verfahren nach Anspruch 8, wobei die Keramikpartikel in der ersten und der zweiten Komponente in einer Konzentration von 4,76-80 Gew.-% (5-400 phr) vorliegen.

10. Verfahren nach Anspruch 9, wobei die Keramikpartikel der ersten und der zweiten Komponente aus der Gruppe bestehend aus Aluminiumoxid, Aluminiumnitrid, Bornitrid, Berylliumoxid, Zinkoxid, Titandioxid, Magnesiumoxid und Kombinationen davon ausgewählt sind.

11. Beschichtungszusammensetzung, umfassend:
Polyharnstoff, der aus einem Reaktionsgemisch gebildet ist, das Folgendes umfasst:
(a) eine erste Komponente, die Isocyanat und Keramikpartikel umfasst, wobei das Isocyanat ein Prepolymer mit Isocyanat-Funktionalität umfasst und die Keramikpartikel in der ersten Komponente eine Partikelsiebgröße von 0,01-100 Mikrometern und eine Konzentration von 4,76-80 Gew.-% (5-400 phr) aufweisen; und
(b) eine zweite Komponente, die ein Amin und Keramikpartikel umfasst, die in der zweiten Komponente eine Partikelsiebgröße von 0,01-100 Mikrometern und eine Konzentration von 4,76-80 Gew.-% (5-400 phr) aufweisen,
wobei die erste und die zweite Komponente unter Druck gespritzt werden können und miteinander reagieren, um die Polyharnstoffbeschichtung zu bilden, die eine Dicke, eine Wärmeleitfähigkeit von mindestens 0,40 W/m *K und eine Spannungsfestigkeit von mindestens 31496 kV/m (0,8 kV/mil) der Beschichtungsdicke aufweist.

12. Beschichtungszusammensetzung nach Anspruch 11, wobei die Dicke zwischen 0,05-1,5 mm liegt.

13. Beschichtungszusammensetzung nach Anspruch 12, wobei das partikelförmige Keramikfüllmaterial der ersten und der zweiten Komponente kugel-, stäbchen- oder plättchenförmige Partikel mit Aspektverhältnissen zwischen 1-50 aufweist.

14. Beschichtungszusammensetzung nach Anspruch 13, wobei die Keramikpartikel der ersten und der zweiten Komponente aus der Gruppe bestehend aus Aluminiumoxid, Aluminiumnitrid, Bornitrid, Berylliumoxid, Zinkoxid, Titandioxid, Magnesiumoxid und Kombinationen davon ausgewählt sind.

15. Beschichtungszusammensetzung nach Anspruch 11, wobei die erste Komponente scherverdünnend ist.

## Revendications

1. Système de batterie, comprenant :
un élément de batterie comportant un boîtier en métal ; et
un revêtement de polyurée sur ledit boîtier en métal, ledit revêtement de polyurée étant formé d'un mélange de réaction comprenant :
(a) un premier composant ayant une viscosité de 100 à 2 000 cP, et comprenant de l'isocyanate et des particules céramiques, ledit isocyanate comprenant un prépolymère fonctionnel isocyanate ; et
(b) un second composant ayant une viscosité de 100 à 2 000 cP, et comprenant une amine et des particules céramiques,
dans lequel lesdits premier et second composants peuvent être pulvérisés sous pression et réagir pour former ledit revêtement de polyurée ayant une épaisseur, une conductivité thermique d'au moins 0,40 W/m.K, et une rigidité diélectrique d'au moins 31 496 kV/m (0,8 kV/mil) de ladite épaisseur de revêtement.

2. Système de batterie selon la revendication 1, dans lequel ladite épaisseur de revêtement est comprise entre 0,05 et 1,5 mm.

3. Système de batterie selon la revendication 1, dans lequel lesdites particules céramiques desdits premier et second composants ayant une taille de particule sur tamis de 0,01 à 100 micromètres, et des rapports de côté de particule en forme de sphère, de tige ou de plaque compris entre 1 et 50.

4. Systèmes de batterie selon la revendication 3, dans lesquels lesdites particules céramiques sont présentes dans lesdits premier et second composants à une concentration de 4,76 à 80 % en poids (5 à 400 pce (pour cent d'élastomère)).

5. Système de batterie selon la revendication 4, dans lequel lesdites particules céramiques desdits premier et second composants sont choisies dans le groupe consistant en l'alumine, le nitrure d'aluminium, le nitrure de bore, l'oxyde de béryllium, l'oxyde de zinc, le dioxyde de titane, l'oxyde de magnésium, et leurs combinaisons.

6. Procédé d'application d'un revêtement de polyurée diélectrique thermiquement conducteur à un boîtier d'élément de batterie, ledit procédé comprenant :
(a) la préparation d'un mélange de réaction comprenant :
(i) un premier composant ayant une viscosité de 100 à 2 000 cP, et comprenant de l'isocyanate et des particules céramiques, ledit isocyanate comprenant un prépolymère fonctionnel isocyanate ; et
(ii) un second composant ayant une viscosité de 100 à 2 000 cP, et comprenant une amine et des particules céramiques ;
(b) la pulvérisation dudit premier composant à travers un premier orifice sur le boîtier d'élément de batterie ; et
(c) sensiblement simultanément à l'étape (b), la pulvérisation dudit second composant à travers un second orifice sur le boîtier d'élément de batterie de sorte que lesdits premier et second composants réagissent pour former ledit revêtement de polyurée ayant une épaisseur, une conductivité thermique d'au moins 0,40 W/m.K, et une rigidité diélectrique d'au moins 31 496 kV/m (0,8 kV/mil) de ladite épaisseur de revêtement.

7. Procédé selon la revendication 6, dans lequel ladite épaisseur de revêtement de polyurée est comprise entre 0,05 et 1,5 mm.

8. Procédé selon la revendication 6, dans lequel lesdites particules céramiques desdits premier et second composants ont une taille de particule sur tamis de 0,01 à 100 micromètres, et des rapports de côté de particule en forme de sphère, de tige ou de plaque compris entre 1 et 50.

9. Procédé selon la revendication 8, dans lequel lesdites particules céramiques sont présentes dans lesdits premier et second composants à une concentration de 4,76 à 80 % en poids (5 à 400 pce).

10. Procédé selon la revendication 9, dans lequel lesdites particules céramiques desdits premier et second composants sont choisies dans le groupe consistant en l'alumine, le nitrure d'aluminium, le nitrure de bore, l'oxyde de béryllium, l'oxyde de zinc, le dioxyde de titane, l'oxyde de magnésium, et leurs combinaisons.

11. Composition de revêtement, comprenant :
de la polyurée formée à partir d'un mélange de réaction comprenant :
(a) un premier composant comprenant de l'isocyanate et des particules céramiques, ledit isocyanate comprenant un prépolymère fonctionnel isocyanate, et lesdites particules céramiques ayant une taille de particule sur tamis de 0,01 à 100 micromètres et une concentration de 4,76 à 80 % en poids (5 à 400 pce) dans ledit premier composant ; et
(b) un second composant comprenant une amine et des particules céramiques ayant une taille de particule sur tamis de 0,01 à 100 micromètres et une concentration de 4,76 à 80 % en poids (5 à 400 pce) dans ledit second composant,
dans laquelle lesdits premier et second composants peuvent être pulvérisés sous pression et réagir l'un avec l'autre pour former ledit revêtement de polyurée ayant une épaisseur, une conductivité thermique d'au moins 0,40 W/m.K, et une rigidité diélectrique d'au moins 31 496 kV/m (0,8 kV/mil) de ladite épaisseur de revêtement.

12. Composition de revêtement selon la revendication 11, dans laquelle ladite épaisseur est comprise entre 0,05 et 1,5 mm.

13. Composition de revêtement selon la revendication 12, dans laquelle ladite charge céramique particulaire des premier et second composants a des rapports de côté de particule en forme de sphère, de tige, ou de plaque compris entre 1 et 50.

14. Composition de revêtement selon la revendication 13, dans laquelle lesdites particules céramiques desdits premier et second composants sont choisies dans le groupe consistant en l'alumine, le nitrure d'aluminium, le nitrure de bore, l'oxyde de béryllium, l'oxyde de zinc, le dioxyde de titane, l'oxyde de magnésium, et leurs combinaisons.

15. Composition de revêtement selon la revendication 11, dans laquelle ledit premier composant est un fluide de rhéofluidification.
